# EUROPÄISCHE PATENTSCHRIFT

(11) **EP 1 613 879 B1**
(45) Veröffentlichungstag und Bekanntmachung des Hinweises auf die Patenterteilung: **30.08.2006**
(21) Anmeldenummer: 03758085.9
(22) Anmeldetag: 31.10.2003
(51) Int. Cl.: F16H 61/00

(54) **VORRICHTUNG ZUM HYDRAULISCHEN VERSTELLEN**
DEVICE FOR HYDRAULICALLY ADJUSTING
DISPOSITIF DE REGLAGE HYDRAULIQUE

(30) Priorität: 28.11.2002 DE 10255535
(43) Veröffentlichungstag der Anmeldung: 11.01.2006
(73) Patentinhaber: AUDI AG, 85045 Ingolstadt (DE)
(72) Erfinder: FLEISCHMANN, Hans, 85134 Stammham (DE); SCHOLLE, Tassilo, 85055 Ingolstadt (DE); WAGNER, Rupert, 86556 Kühbach (DE)
(74) Vertreter: Lehle, Josef
(86) Internationale Anmeldenummer: PCT/EP2003/012109
(87) Internationale Veröffentlichungsnummer: WO 2004/048814

(56) Entgegenhaltungen:
- EP-A- 1 156 235
- DE-A- 4 035 624
- DE-A- 19 757 232

## Beschreibung

Die Erfindung betrifft eine Antriebsanordnung mit stufenlosem Umschlingungsgetriebe und einer Vorrichtung zum hydraulischen Verstellen eines Scheibensatzes eines stufenlosen Umschlingungsgetriebes für Kraftfahrzeuge, mit einem dem Scheibensatz koaxial benachbarten Zwischenachsdifferential, gemäß dem Oberbegriff des Patentanspruches 1.

Zum relevanten Stand der Technik wird auf die DE 197 57 232 A1 verwiesen, von der als gattungsbildende Schrift ausgegangen wird. Dabei ist das Zwischenachsdifferential bzw. ein Torsendifferential in den getriebenen Scheibensatz des Umschlingungsgetriebes integriert, während die zur hydraulischen Verstellung der Losscheibe des Scheibensatzes vorgesehenen, ringförmigen Hydraulikkammern radial außen um das Ausgleichsgehäuse des Torsendifferentiales angeordnet sind. Wie die Zuführung des Hydraulikmediums zu den Hydraulikkammern erfolgen soll, ist in der Schrift nicht dargestellt.

Aufgabe der Erfindung ist es, eine Vorrichtung der gattungsgemäßen Art aufzuzeigen, die eine baulich und fertigungstechnisch günstige und zuverlässige Versorgung der Hydraulikkammern zum Verstellen der Antriebsübersetzungen sicherstellt.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass das Hydraulikmedium über zumindest einen Kanal im Ausgleichsgehäuse geführt ist, welcher Kanal über Anschlussverbindungen mit dem Scheibensatz einerseits und mit im Getriebegehäuse angeordneten Zuführkanälen andererseits kommuniziert. Die Erfindung nutzt somit ein bereits vorhandenes Bauteil - nämlich des Ausgleichsgehäuse des Differentiales - zur Führung des Hydraulikmediums, wobei das Einbringen der betreffenden Kanäle einen nur geringfügigen Mehraufwand darstellt. Über entsprechend gestaltete Anschlussverbindungen kann dann das Hydraulikmedium unmittelbar zugeführt bzw. abgeführt werden.

Besonders vorteilhaft kann als Anschlussverbindung zwischen dem Scheibensatz und dem Ausgleichsgehäuse zumindest ein dicht in den Kanal des Ausgleichsgehäuses und in einen korrespondierenden Kanal des Scheibensatzes eingesetztes Steckrohr vorgesehen sein. Insbesondere wenn das zumindest eine Steckrohr radial innerhalb eines zwischen dem Scheibensatz und dem Ausgleichsgehäuse vorgesehenem Wälzlagers verläuft, stellt diese hydraulische Verbindung eine zuverlässige und robuste Führung des Hydraulikmediums sicher, die zudem eine begrenzt kardanische Beweglichkeit im Antriebssystem aufgrund von möglichen Planlauf-Toleranzen, Lagerspielen, Torsionsspannungen, etc. ausgleichen kann. Weiterhin ist der axiale Ausgleich möglich.

Des weiteren kann der Innenring des Wälzlagers auf einem Hals eines Führungsabschnittes des Scheibensatzes sitzen und das zumindest eine Steckrohr in einer Ausnehmung des Halses verlaufen. Dies stellt eine baulich besonders vorteilhafte und hinsichtlich der Montage günstige Konstruktion dar, bei der zudem die Steckrohre unmittelbar an einer gehäuseseitigen Drehlagerung abgestützt sind.

Das Steckrohr kann ferner mit einem radialen Vorsprung versehen sein, mittels dem es stirnseitig zwischen dem Innenring des Wälzlagers und dem anschließenden Führungsabschnitt des Scheibensatzes axial gehalten ist. Damit wird eine Sicherung der Steckrohre geschaffen, die ohne Mehraufwand herstellbar und montageeinfach ist. Wahlweise kann die axiale Führung des Steckrohres auch durch Anschlag der Stirnflächen des Steckrohres gewährleistet werden.

Eine zuverlässige Abdichtung auch bei ungünstig zusammentreffenden Herstellungstoleranzen wird schließlich erzielt, indem die Steckrohre an beiden Enden Dichtringe zur Abdichtung mit den anschließenden Kanälen tragen.

In weiterer vorteilhafter Ausgestaltung der Erfindung kann an der dem Scheibensatz abgewandten Stirnseite des Ausgleichsgehäuses als Anschlussverbindung ein rohrförmiger Kolbenringträger mit einer innenliegenden Dichtungsbüchse zur Zuführung des Hydraulikmediums befestigt sein, welcher Kolbenringträger mit in Außennuten eingesetzten Kolbenringen in einer gehäuseseitigen, mit Zuführkanälen versehenen, zylinderförmigen Aufnahme einragt. Der Kolbenringträger kann somit mit dem Ausgleichsgehäuse des Differentiales rotieren und zwischen dessen Dichtungsbüchse und dem Außengehäuse das Hydraulikmedium führen. Damit wird eine präzise Führung des Kolbenringträgers möglich.

Dabei kann die innenliegende Dichtungsbüchse den Kolbenringträger axial überragen und mittels eines Wellendichtringes in der zylinderförmigen Aufnahme abgedichtet sein, wodurch sich der Aufbau des Kolbenringträgers insgesamt fertigungstechnisch vereinfacht.

Ferner kann der Kolbenringträger an seinem Innenumfang zumindest eine Längsnut aufweisen, die in Verbindung mit der rotationssymmetrischen Dichtungsbüchse zumindest einen mit dem Kanal im Ausgleichsgehäuse korrespondierenden Längskanal bildet. Auch dies trägt wesentlich zu einer konstruktiven Vereinfachung des Kolbenringträgers bei.

Besonders vorteilhaft kann der Kolbenringträger über zumindest ein Wälzlager unmittelbar an der gehäuseseitigen Aufnahme gelagert sein, so dass sich eine robuste, auch bei hohen Drehzahlen und Antriebsmomenten im Antriebsstrang verschleißarme und laufruhige Abstützung des Differentiales und des Kolbenringträgers ergibt.

Das Wälzlager kann dabei bevorzugt zwischen dem Befestigungsflansch des Kolbenringträgers am Ausgleichsgehäuse und dessen die Kolbenringe tragenden Ringabschnitt angeordnet sein, woraus eine axial kurz bauende, steife Konstruktion resultiert.

Schließlich kann das Zwischenachsdifferential (auch als Mittendifferential bekannt) wie vorstehend bereits ausgeführt ein Torsendifferential sein und jeweils zwischen den mit den Abtriebrädern zusammenwirkenden, im Ausgleichsgehäuse drehbar gelagerten Schneckenrädern je ein Kanal für das Hydraulikmedium angeordnet sein. Damit werden die sich aus der Bauweise des Torsendifferentiales ergebenden Gehäuseabschnitte mit größerer Materialansammlung optimal für die Einarbeitung der das Hydraulikmedium führenden Kanäle eingesetzt, wobei dessen Festigkeit und der erforderliche Einbauraum nicht beeinträchtigt werden.

Ein Ausführungsbeispiel der Erfindung ist im Folgenden mit weiteren Einzelheiten näher beschrieben.

Die anliegende Zeichnung zeigt einen Längsschnitt einer Vorrichtung zum hydraulischen Verstellen des getriebenen Scheibensatzes eines Umschlingungsgetriebes für ein Kraftfahrzeug.

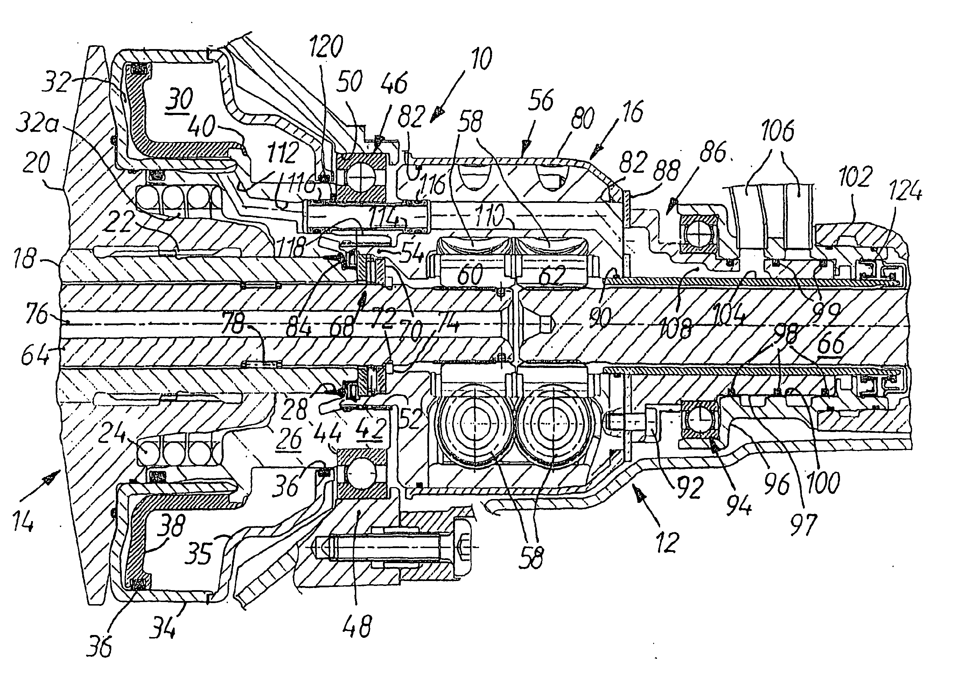

In der Zeichnung bezeichnet 10 allgemein eine Antriebsanordnung, die drehbar in einem nur teilweise dargestelltem Getriebegehäuse 12 gelagert ist und die sich im wesentlichen aus einem nur teilweise ersichtlichen getriebenen Scheibensatz 14 und einem koaxial dazu benachbartem Zwischenachsdifferential bzw. Torsendifferential 16 zusammensetzt. Der auf der linken Seite der Zeichnung nicht ersichtliche Teil des Scheibensatzes 14 und dessen Lagerung (Kegelrollenlager) können so ausgeführt sein, wie dies in der vorgenannten DE 197 57 232 A1 der Fall ist; insoweit wird ausdrücklich darauf Bezug genommen.

Der Scheibensatz 14 ist Teil eines Umschlingungsgetriebes für Kraftfahrzeuge und wirkt in bekannter Weise über eine Kette oder ein Gliederband mit einem auf einer Getriebeeingangswelle angeordneten, antreibenden Scheibensatz (nicht dargestellt) zusammen.

Der getriebene Scheibensatz 14 weist eine Festscheibe (auf der Zeichnung nicht ersichtlich) auf, die ein gemeinsames Bauteil mit einer daran anschließenden Hohlwelle 18 bildet. Die Festscheibe ist in einer Wand des Getriebegehäuses 12 über ein zweireihiges Kegelrollenlager axial unverschiebbar gelagert (vgl. vorgenannte DE 197 57 232 A1).

Auf der Hohlwelle 18 ist die Losscheibe 20 axial verschiebbar geführt, wobei eine mit 22 bezeichnete Keilverbindung einen Formschluss in Umfangsrichtung herstellt. Dabei ist die Losscheibe 20 wie ersichtlich auf der Zeichnung nach links mittels einer Schraubendruckfeder 24 vorgespannt, die an einem Führungsabschnitt 26 abgestützt ist. Der Führungsabschnitt 26 ist durch eine ringförmige Laserschweißverbindung bei 28 fest mit der Hohlwelle 18 verbunden.

Zur Verstellung der Losscheibe 20 relativ zur nicht dargestellten Festscheibe sind zwischen dem Führungsabschnitt 26 und der Losscheibe 20 mittels zusammengeschweißter und an der Losscheibe 20 festgelegter Ringbleche 34, 35 zwei ringförmige Hydraulikkammern 30, 32 gebildet, die durch allgemein mit 36 bezeichnete Dichtringe abgedichtet und durch einen ringförmigen Stellkolben 38 unterteilt sind. Der fest über eine Bördelverbindung 40 mit dem Führungsabschnitt 26 verbundene Stellkolben 38 wirkt bei entsprechender Druckbeaufschlagung der Hydraulikkammer 30, 32 als Reaktionsglied zur entsprechenden axialen Verstellung der Losscheibe 20.

Der Führungsabschnitt 26 weist einen ringförmigen Hals 42 auf, auf dessen Außenumfang der Innenring 44 eines Wälzlagers bzw. Kugellagers 46 sitzt. Das Kugellager 46 ist in einer Getriebegehäusewand 48 in einer entsprechenden Ausnehmung 50 aufgenommen und wirkt somit als weitere Drehlagerung für den Scheibensatz 14.

Am Innenumfang des ringförmigen Halses 42 ist etwa in der Rotationsebene des Kugellagers 46 eine allgemein mit 52 bezeichnete Keilverzahnung eingearbeitet, die mit einer korrespondierenden Keilverzahnung auf einem hülsenförmigen Vorsprung 54 des Ausgleichsgehäuses 56 des Torsendifferentiales 16 als triebliche Verbindung zusammenwirkt.

In dem Ausgleichsgehäuse 56 sind in bekannter Weise drei gleichmäßig über dessen Umfang verteilte Schneckenräderpaare 58 gelagert, die mit entsprechenden Abtriebsrädern 60, 62 in Eingriff sind. Die Abtriebsräder 60, 62 sitzen drehschlüssig auf Abtriebswellen 64, 66, von denen die Abtriebswelle 64 durch die Hohlwelle 18 hindurch über ein nicht dargestelltes Antriebsritzel und ein vorderes Differential die Vorderräder des Kraftfahrzeuges und die Abtriebswelle 66 über eine angeschlossene Kardanwelle und ein hinteres Differential die Hinterräder des Kraftfahrzeuges antreibt.

Die Antriebswelle 64 ist neben der nicht dargestellten Lagerung im Bereich des Antriebsritzels (vgl. wiederum die vorgenannte DE 197 57 232 A1) in der einen Belastungsrichtung über ein Axiallager 68 an der Hohlwelle 18 abgestützt, wobei dessen einer Anlaufring 70 an einem in eine Ringnut 72 eingesprengten Sicherungsring 74 gehalten ist.

Das Torsendifferential 16 bzw. dessen Funktionsteile sind wie bei der vorgenannten DE 197 57 232 A1 mit dem Schmieröl aus dem nicht dargestelltem vorderen Differential beölt, wobei ein in der Abtriebswelle 64 vorgesehener Zuführkanal 76 in das Ausgleichsgehäuse 56 mündet. Die Rückführung des Schmieröles erfolgt in der Gegenrichtung durch die Hohlwelle 18 hindurch, wobei neben dem Axiallager 68 auch noch zwei radial abstützende Nadellager 78 (es ist nur ein Nadellager 78 ersichtlich, das zweite ist etwa im Bereich der Festscheibe positioniert) zwischen der Hohlwelle 18 und der Abtriebswelle 64 beölt werden.

Das Torsendifferential 16 ist vollständig gekapselt ausgebildet, um nur eine Beölung der beschriebenen Funktionsteile mit dem Differential-Schmieröl (einem Hypoidöl) sicherzustellen. Dazu ist ein das Ausgleichsgehäuse 56 umschließendes, ringförmiges Abdeckteil 80 vorgesehen, das in Verbindung mit Dichtringen 82 das Ausgleichsgehäuse 56 nach außen abdichtet. Ein weiterer Dichtring 84 ist im Bereich der Keilverzahnung 52 zwischen der Hohlwelle 18 und dem hülsenförmigen Vorsprung 54 des Ausgleichsgehäuses 56 eingesetzt.

Die stirnseitige Abdichtung des Ausgleichsgehäuses 56 bewirkt schließlich ein rohrförmiger Kolbenringträger 86, dessen Anschlussflansch 88 mit einem weiteren Dichtring 90 dicht mit dem Ausgleichsgehäuse 56 und einer axialen Dichtung (nicht dargestellt) verschraubt ist (Schrauben 92).

Der Kolbenringträger 86 und dementsprechend das Ausgleichsgehäuse 56 ist mittels eines weiteren Wälzlagers bzw. Kugellagers 94 in einer entsprechenden, gehäusefesten Aufnahme 96 direkt an den Anschlussflansch 88 anschließend drehbar gelagert, wobei der mit Kolbenringen 98 in entsprechenden Außennuten 99 bestückte Ringabschnitt 97 des Kolbenringträgers 86 wie ersichtlich in eine zylindrische Bohrung 100 des die Aufnahme 96 aufweisenden Gehäuseteiles 102 einragt.

Eine in den Kolbenringträger 86 eingesetzte, rotationssymmetrische Dichtungsbüchse 104 überragt dabei axial den Ringabschnitt 97 und ist zum Gehäuseteil 102 über einen Wellendichtring 124 abgedichtet, so dass kein Hydraulikmedium aus den Kanälen 106, 108 austreten kann.

Über den Kolbenringträger 86 und die in diesen eingesetzte, rotationssymmetrische Dichtungsbüchse 104 können über die ersichtlichen und jeweils mit einem einheitlichen Bezugszeichen versehenen Kanäle 106 im Gehäuseteil 102, über die durch Längsnuten gebildeten Kanäle 108 im Kolbenringträger 86, über die im Ausgleichsgehäuse 56 eingearbeiteten Kanäle 110 und schließlich über die korrespondierenden Kanäle 112 im Führungsabschnitt 26 (es ist in der Schnittansicht der Zeichnung jeweils nur ein Kanal 112 ersichtlich) die Hydraulikkammern 30, 32, 32a wechselseitig mit einem unter Druck stehendem Hydraulikmedium zur Steuerung der Antriebsübersetzung des Umschlingungsgetriebes beaufschlagt werden.

Die hydraulische Verbindung zwischen den Kanälen 110 im Ausgleichsgehäuse 56 und den Kanälen 112 im Führungsabschnitt 26 sind durch drei Steckrohre 114 gebildet. Die Steckrohre 114 ragen dazu jeweils unter Zwischenschaltung von Dichtringen 116 einerseits in eine entsprechende stirnseitige Ausnehmung des Führungsabschnittes 26 und des Ausgleichsgehäuses 56 ein, wobei sie durch im Querschnitt betrachtet halbkreisförmige und radial nach außen offene Ausnehmungen 118 des Führungsabschnittes 26 innerhalb des Innenringes 44 des Kugellagers 46 hindurch geführt sind. Die Steckrohre 114 (es sind zur Verstellung der Losscheibe 20 wie ausgeführt drei gleichmäßig über den Umfang des Führungsabschnittes 26 bzw. des Ausgleichsgehäuses 56 verteilte Steckrohre angeordnet) sind mittels an diese angeformte, radiale Vorsprünge 120 zwischen dem Innenring 44 und einer stirnseitigen Ausnehmung des Führungsabschnittes 26 gehalten. Wahlweise kann die axiale Führung des Steckrohres auch durch Anschlag der Stirnflächen des Steckrohres gewährleistet werden.

## Patentansprüche

1. Antriebsanordnung (10) mit stufenlosem Umschlingungsgetriebe und Vorrichtung zum hydraulischen Verstellen eines Scheibensatzes (14) des stufenlosen Umschlingungsgetriebes für Kraftfahrzeuge, mit einem dem Scheibensatz koaxial benachbarten Zwischenachsdifferential (16), dessen Ausgleichsgehäuse (56) trieblich mit dem Scheibensatz verbunden ist, wobei die axial verschiebbare Losscheibe (20) des Scheibensatzes mit zumindest einer ringförmigen Hydraulikkammer (30,32) und einem darin geführten Stellkolben (38) zusammenwirkt und durch Druckbeaufschlagung verschiebbar ist und wobei das Hydraulikmedium über entsprechende Kanäle und eine hydraulische Steuerung zuführbar ist, **dadurch gekennzeichnet, dass** das Hydraulikmedium über zumindest einen Kanal (110) im Ausgleichsgehäuse (56) geführt ist, welcher Kanal (110) über Anschlussverbindungen (114, 86) mit dem Scheibensatz (14) einerseits und mit im Getriebegehäuse (12, 102) angeordneten Zuführkanälen (106) andererseits kommuniziert.

2. Anordnung nach Anspruch 1, **dadurch gekennzeichnet, dass** als Anschlussverbindung zwischen dem Scheibensatz (14) und dem Ausgleichsgehäuse (56) zumindest ein dicht in den Kanal (110) des Ausgleichsgehäuses (56) und in einen korrespondierenden Kanal (112) des Scheibensatzes (14) eingesetztes Steckrohr (114) vorgesehen ist.

3. Anordnung nach den Ansprüchen 1 und 2, **dadurch gekennzeichnet, dass** das zumindest eine Steckrohr (114) radial innerhalb eines zwischen dem Scheibensatz (14) und dem Ausgleichsgehäuse (56) vorgesehenem Wälzlagers (46) verläuft.

4. Anordnung nach den Ansprüchen 1 bis 3, **dadurch gekennzeichnet, dass** der Innenring (44) des Wälzlagers (46) auf einem Hals (42) eines Führungsabschnittes (26) des Scheibensatzes (14) sitzt und dass das zumindest eine Steckrohr (114) in einer Ausnehmung (118) des Halses (42) verläuft.

5. Anordnung nach einem oder mehreren der Ansprüche 1 bis 4, **dadurch gekennzeichnet, dass** das Steckrohr (114) mit einem radialen Vorsprung (120) versehen ist, mittels dem es stirnseitig zwischen dem Innenring (44) des Wälzlagers (46) und dem anschließenden Führungsabschnitt (26) des Scheibensatzes (14) axial gehalten ist oder ohne radialen Vorsprung durch den axialen Anschlag an den Stirnflächen haltbar ist.

6. Anordnung nach einem oder mehreren der Ansprüche 1 bis 5, **dadurch gekennzeichnet, dass** das Steckrohr (114) an beiden Enden Dichtringe (116) zur Abdichtung mit den anschließenden Kanälen (112, 110) trägt.

7. Anordnung nach einem oder mehreren der Ansprüche 1 bis 6, **dadurch gekennzeichnet, dass** an der dem Scheibensatz (14) abgewandten Stirnseite des Ausgleichsgehäuses (56) als Anschlussverbindung ein rohrförmiger Kolbenringträger (86) mit einer innenliegenden Dichtungsbüchse (104) zur Zuführung des Hydraulikmediums befestigt ist, welcher Kolbenringträger (86) mit in Außennuten (99) eingesetzten Kolbenringen (98) in eine zylindrische Bohrung (100) eines Gehäuseteiles (102) einragt, in dem ferner Zuführkanäle (106) vorgesehen sind.

8. Anordnung nach Anspruch 7, **dadurch gekennzeichnet, dass** die innenliegende Dichtungsbüchse (104) den Kolbenringträger (86) axial überragt und mittels eines Wellendichtringes (124) in dem Gehäuseteil (102) abgedichtet ist.

9. Anordnung nach Anspruch 7, **dadurch gekennzeichnet, dass** der Kolbenringträger (86) an seinem Innenumfang zumindest eine Längsnut aufweist, die in Verbindung mit der rotationssymmetrischen Dichtungsbüchse (104) zumindest einen mit dem Kanal (110) im Ausgleichsgehäuse (56) korrespondierenden Kanal (108) bildet.

10. Anordnung nach einem oder mehreren der Ansprüche 7 bis 9, **dadurch gekennzeichnet, dass** der Kolbenringträger (86) über zumindest ein Wälzlager (94) unmittelbar an der gehäuseseitigen Aufnahme (92) gelagert ist.

11. Anordnung nach Anspruch 10, **dadurch gekennzeichnet, dass** das Wälzlager (94) zwischen dem Anschlussflansch (88) des Kolbenringträgers (86) am Ausgleichsgehäuse (56) und dessen die Kolbenringe (98) tragenden Ringabschnitt (97) angeordnet ist.

12. Anordnung nach einem oder mehreren der vorhergehenden Ansprüche, **dadurch gekennzeichnet, dass** das Zwischenachsdifferential ein Torsendifferential (16) ist und dass jeweils zwischen den mit den Abtriebrädem (60, 62) zusammenwirkenden, im Ausgleichsgehäuse (56) drehbar gelagerten Schneckenrädern (58) je ein Kanal (110) für das Hydraulikmedium angeordnet ist.

## Claims

1. Drive arrangement (10) with infinitely variable encasement gearing and device for hydraulic adjustment of a set of discs (14) of the infinitely variable encasement gearing for motor vehicles, comprising an intermediate axle differential coaxially adjacent the set of discs (16), the compensating casing (56) is in a driven manner connected to the set of discs, and the axially displaceable go-disc (20) of the set of discs cooperates with at least one circularly shaped hydraulic chamber (30, 32) and a setting piston (38) guided in the latter, and it is displaceable by pressure-loading, and the hydraulic medium is fed via corresponding channels and a hydraulic control, **characterised in that** the hydraulic medium is ducted via at least one channel (110) in the compensating casing (56), and this channel (110) communicates on the one hand via connections (114, 86) with the set of discs (14) and on the other hand with the feed channels (106) which are arranged in the gear casing (12, 102).

2. Arrangement according to Claim 1, **characterised in that** at least one plug-in pipe (114) is provided and inserted tightly into the channel (110) of the compensating casing (56) and into a corresponding channel (112) of the set of discs (14) to serve as connection between the set of discs (14) and the compensating casing (56).

3. Arrangement according to Claims 1 and 2, **characterised in that** the at least one plug-in pipe (114) extends radially within a roller bearing (46) which is provided between the set of discs (14) and the compensating casing (56).

4. Arrangement according to Claims 1 to 3, **characterised in that** the inner ring (44) of the roller bearing (46) is seated on the neck (42) of a guide section (26) of the set of discs (14), and the at least one plug-in pipe (114) extends in a cutout (118) of the neck (42).

5. Arrangement according to one or more of Claims 1 to 4, **characterised in that** the plug-in pipe (114) is provided with a radial protrusion (120) by means of which it is at the front axially held between the inner ring (44) of the roller bearing (46) and the adjacent guide section (26) of the set of discs (14) or without radial protrusion held at the end surfaces by the axial stop.

6. Arrangement according to one or more of Claims 1 to 5, **characterised in that** the plug-in pipe (114) has on both ends sealing rings (116) for sealing relative to the adjacent channels (112, 110).

7. Arrangement according to one or more of Claims 1 to 6, **characterised in that** at the front side of the compensating casing (56) facing away from the set of discs (14) is mounted as a connection a tubular piston ring support (86) with an internal sealing box (104) for delivery of the hydraulic medium, and this piston ring support (86) intrudes with piston rings (98), which are inserted into outside grooves (99), into a cylindrical bore (100) of a housing section (102) wherein furthermore feed channels (106) are provided.

8. Arrangement according to Claim 7, **characterised in that** the inner sealing box (104) axially protrudes over the piston ring support (86) and seals in housing section (102) by means of a wave sealing ring (124).

9. Arrangement according to Claim 7, **characterised in that** the piston ring support (86) has in its inner periphery at least one longitudinal groove which establishes, in conjunction with the rotary-symmetrical sealing box (104) at least one channel (108) which corresponds with the channel (108) in the compensating casing (56).

10. Arrangement according to one or more of Claims 7 to 9, **characterised in that** the piston ring support (86) is mounted via at least one roller bearing (94) directly onto the accommodation (92) at the side of the casing.

11. Arrangement according to Claim 10, **characterised in that** the roller bearing (94) is arranged between the connecting flange (88) of the piston ring support (86) on the compensating casing (56) and its circular section (97) which supports the piston rings (98).

12. Arrangement according to one or more of the above claims, **characterised in that** the intermediate axle differential is a torsion differential (16), and between the worm-drive wheels (58), which co-act with the drive wheels (60, 62) and which are rotary mounted in the compensating casing (56), is arranged a respective channel (110) for the hydraulic medium. (B-296A)

## Revendications

1. Système d'entraînement (10) avec une transmission à variation continue et dispositif de réglage hydraulique d'un jeu de disques (14) de la transmission à variation continue pour des véhicules automobiles, avec un différentiel central (116) adjacent coaxialement au jeu de disques, dont le carter de différentiel (56) est relié par entraînement au jeu de disques, la roue folle (20) du jeu de disques déplaçable axialement concourrant avec au moins une chambre hydraulique annulaire (30, 32) et un piston de réglage (38) guidé à l'intérieur et étant déplaçable grâce à la sollicitation de pression et le fluide hydraulique pouvant être alimenté via des canaux appropriés et une commande hydraulique, **caractérisé en ce que** le fluide hydraulique est guidé via au moins un canal (110) dans le carter de différentiel (56), ledit canal communiquant, via des liaisons de raccordement (114, 86), avec le jeu de disques (14) d'une part et avec des canaux d'alimentation (106) disposés dans le carter du différentiel (12, 102) d'autre part.

2. Système selon la revendication 1, **caractérisé en ce qu'** au moins un tube enfichable (114) insérable de manière étanche dans le canal (110) du carter de différentiel (56) et dans un canal correspondant (112) du jeu de disques (14) est prévu comme liaison de raccordement entre le jeu de disques (14) et le carter du différentiel (56).

3. Système selon les revendications 1 et 2, **caractérisé en ce que le** au moins un tube enfichable (114) s'étend radialement à l'intérieur d'un palier à roulement (46) prévu entre le jeu de disques (14) et le carter du différentiel (56).

4. Système selon les revendications 1 à 3, **caractérisé en ce que** la bague intérieure (44) du palier à roulement (46) est posée sur un collet (42) d'une section de guidage (26) du jeu de disques (14) et que le au moins un tube enfichable (114) s'étend dans un creux (118) du collet (42).

5. Système selon l'une ou plusieurs des revendications 1 à 4, **caractérisé en ce que** le tube enfichable (114) est pourvu d'une saillie radiale (120), au moyen de laquelle il est maintenu axialement sur le côté frontal entre la bague intérieure (44) du palier à roulement (46) et la section de guidage adjacente (26) du jeu de disques (14), ou bien peut être maintenu sans saillie radiale, grâce à la butée axiale, sur les faces frontales.

6. Système selon l'une ou plusieurs des revendications 1 à 5, **caractérisé en ce que** le tube enfichable (114) porte sur les deux extrémités des rondelles d'étanchéité (116) pour l'étanchéification des canaux s'y raccordant (112, 110).

7. Système selon l'une ou plusieurs des revendications 1 à 6, **caractérisé en ce que,** sur le côté frontal du carter de différentiel (56) opposé au jeu de disques (14), un porte-segment tubulaire (86) avec un manchon d'étanchéité (104) situé à l'intérieur pour l'alimentation du fluide hydraulique est fixé en tant que liaison de raccordement, ledit support de segment de piston (86) se dressant, avec des segments de piston (98) insérés dans des rainures extérieures (99), dans un trou cylindrique (100)

8. Système selon la revendication 7, **caractérisé en ce que** le manchon d'étanchéité (104) situé à l'intérieur est en saillie axiale du support de segment de piston (86) et est rendu étanche au moyen d'une bague à levres d'étanchéité (124) dans la partie du carter (102).

9. Système selon la revendication 7, **caractérisé en ce que** le support de segment de piston (86) présente sur sa périphérie intérieure au moins une rainure longitudinale, qui, en relation avec le manchon d'étanchéité (104) à symétrie de révolution, forme au moins un canal (108) correspondant au canal (110) dans le carter de différentiel (56).

10. Système selon l'une ou plusieurs des revendications 7 à 9, **caractérisé en ce que** le support de segment de piston (86) est monté via au moins un palier à roulement (94) directement sur le logement (92) du côté du carter.

11. Système selon la revendication 10, **caractérisé en ce que** le palier à roulement (94) est disposé entre la bride de raccordement (88) du support de segment de piston (86) sur le carter de différentiel (56) et sa section annulaire (97) portant le segment de piston (98).

12. Système selon l'une ou plusieurs des revendications précédentes, **caractérisé en ce que** le différentiel central est un différentiel détecteur du torque (16) et que respectivement un canal (110) pour le fluide hydraulique est disposé entre les roues vis (58) montées dans le carter de différentiel (56) concourrant avec des roues dentées actionnées (60, 62).
